# EUROPEAN PATENT APPLICATION

(11) **EP 4 574 722 A1**
(43) Date of publication of application: **25.06.2025**
(21) Application number: 23219961.2
(22) Date of filing: 22.12.2023
(51) Int. Cl.: B65G 61/00, B65G 67/02, B65G 67/20, B65G 67/24

(54) **ARRANGEMENT AND METHOD FOR UNLOADING/LOADING PACKAGES**

(71) Applicant: Yaskawa Nordic AB, 385 25 Torsås (SE)
(72) Inventor: Almers, Fredrik, 373 72 Jämjö (SE)
(74) Representative: AWA Sweden AB

(57) **Abstract**

The present disclosure relates to an arrangement 1 for unloading and/or loading packages 2 from/to a transport container 3. The arrangement comprises at least two robot arms 10; an arm suspension frame 20 configured to support the at least two robot arms; a conveyor arrangement 30; and a supporting system 40 connected to the arm suspension frame. The supporting system allow the arm suspension frame to be moved in and out of the transport container. The two robot arms move packages between the transport container and the conveyor arrangement. The arrangement further comprises a control unit 50 configured to selectively individually control the movement such that said at least two robot arms move individual packages, or to individually control the movement such that said robot arms collaborate when moving one package. The present disclosure further relates to a method and use of the arrangement.

## Description

### Technical field

The present disclosure relates to an arrangement for unloading and/or loading packages from/to a transport or transport container. The present disclosure further relates to a method for operating such arrangement and use of such arrangement.

### Background

The forces of globalization and an escalating global demand for products have led to an increased need for efficient worldwide package delivery. Rather than transporting individual products, they are consolidated and shipped in containers. Typically, these containers reach the nearest port and are then transferred to trains or trucks for the final leg of the journey. It is common for containers to be loaded from top to bottom with identical packages.

The loading and unloading of containers are not only time-consuming but also monotonous. Further, access to personnel for these tasks can become a bottleneck in the transportation process. To address this challenge, robots have been introduced to streamline these operations. For instance, a robotic unloading system can be designed to autonomously unload packages from containers. These robots utilize a robotic arm to efficiently handle a variety of packages.

However, a persistent challenge with existing robotic unloading systems is their limited speed and precision when dealing with a mix of differently sized or shaped packages. This limitation underscores the ongoing need for technological improvements to enhance the adaptability and efficiency of robotic unloading in the containerized shipping industry.

### Summary

It is an object of the invention to provide a solution that addresses at least some of the design criteria described above, namely, to provide an arrangement which is more efficient and faster at unloading and loading packages. Thereby, further improving the worldwide package delivery system. Preferably, the arrangement has an improved adaptability when handling different kind of packages, for example packages of different sizes.

This has in accordance with a first aspect been accomplished by an arrangement for unloading and/or loading packages from/to a transport or transport container. The arrangement comprises at least two robot arms, an arm suspension frame configured to support the at least two robot arm, a conveyor arrangement, and a supporting system connected to the arm suspension frame, wherein the supporting system is configured to allow the arm suspension frame to be moved into and out of the transport or transport container. The at least two robot arms are configured to move packages between the transport or transport container and the conveyor arrangement. The arrangement further comprises a control unit configured to selectively individually control the movement of each robot arm such that said at least two robot arms move individual packages, or to individually control the movement of each robot arm such that said at least two robot arms collaborate when moving one package.

The provided arrangement facilitates the loading and unloading of packages from/to a transport or a transport container. By allowing the control unit to individually control the robot arms such that the robot arms collaborate when moving one package, the robot arms may co-operate to move one package. This facilitates moving packages that are more challenging to lift, for example heavier packages, long packages, or other challenging shapes. The collaboration may be done through a master robot arm that is supposed to do the main lift, and a slave robot arm which supports the master robot arm by assisting the master robot arm to, for example, lift or balance the package.

Moving the package should be understood as any movement where the robot arm lifts, pushes, or pulls the package. How the robot arms move the package depends on each individual package and the specific situation.

When the control unit individually controls each of the robot arms to move individual packages, the efficiency and speed of the arrangement is improved. This allows the robot arms to simultaneously load or unload packages to or from the transport or transport container without interfering each other. The control unit may shift between a collaboration, where the robot arms collaborate to lift packages or remove packages from stacks, and individually moving package with each robot arm during the loading or unloading process.

The arm suspension frame is configured to support the robot arms. In other words, the robot arms are suspended in the arm suspension frame such that robot arms are hanging from the arm suspension frame. The suspended robot arms provide better access for the robot arms when operating inside a closed volume, as compared to a robot arm which is mounted at ground level. When the robot arms are suspended, the robot arms are allowed to lift packages from the conveyor arrangement and to the transport or transport container without needing to rotate. The robot arm only has to extend to reach the package and then move it to the conveyor arrangement.

The packages are positioned at the conveyor arrangement which either transports the packages out from the transport or transport container or into the transport or transport container. At the end of the conveyor arrangement a new arrangement may be provided to handle the packages.

The supporting system that moves the arm suspension frame, and thereby the robot arms, in and out of the transport container, provides an efficient way of moving the arm suspension frame throughout the length of the transport or the transport container. As an example, the supporting system may move the arm suspension frame to the first row of packages and the robot arms may start to unload the first row of packages. When the robot arms have unloaded all the rows of package that the robot arms are able to reach, the supporting system may move the arm suspension frame further into the transport or transport container.

The transport or transport container should in the context of the invention be understood as a closed volume in which packages may be stored during transportation. The transport container may be an ordinary container used for shipping, but it may also be other volumes reassembling such closed volume, such as a truck trailer, a train carriage, or an airplane.

The arm suspension frame may comprise a track for each robot arm, and each robot arm may be configured to be individually moveable along the track along at least a first part of the arm suspension frame.

The track may provide better kinematics and collaboration for the robot arms as the robot arms may operate at different positions at the respective track to thereby provide a greater freedom of movement for the neighbouring robot arm. The robot arm may operate in a first end of the track while picking a package and at a second end of the track while putting the package on the conveyor arrangement. Thereby, the robot arms may be controlled such that they move the packages out of phase with each other. As an example, a first robot arm may pick a package while a second robot arm delivers a package to the conveyor arrangement. Further, the track may allow the robot arm to move more freely and reach a further distance. The improved freedom of mobility may allow the arrangement to operate with a higher velocity and with greater acceleration. Hence, providing a higher throughput of packages.

The relative movement between the robot and the arm suspension frame may, for example, be achieved by implementing tracks, rails, or grooves on the arm suspension frame and having slider or linear bearings on the robot. However, as is known by the skilled person there are many mechanisms that may contribute to such relative movement.

The track provides a linear movement to the robot arms, such that the robot arms are allowed to move along the arm suspension frame.

The supporting system may comprise a telescopic arm connected to the arm suspension frame, wherein the arm suspension frame may be movable in and out of the transport or transport container by the telescopic arm.

By extracting the telescopic arm, the arm suspension frame is moved into the transport or transport container, and by retracting the telescopic arm, the arm suspension frame is moved out from the transport or transport container. The telescopic arm is a space efficient solution for moving the arm suspension frame with the robot arms. Further, how far the arm suspension frame is moved into the transport or transport container may be easily adapted. Telescopic mechanisms may also be more durable and hence less maintenance may be needed.

The supporting system may comprise an automated guided vehicle, AGV, which is used to move the arm suspension frame in and out from the transport or transport container. An AGV may provide an improved flexibility in how and where the arrangement is operated.

The supporting system may comprise support wheels. The support wheels assist the supporting system in moving and holding the arm suspension frame by providing stability to the supporting system and thereby the arm suspension frame. The supporting system may as an example be provided with two sets of support wheels that are in contact with the floor of the transport or transport container. As an example, the conveyor arrangement may be positioned below the arm suspension frame and the support wheels may be mounted on a frame that extends from the arm suspension frame such that the support wheels contact the floor of the transport or transport container at opposite sides of the conveyor arrangement. Thereby, the robot arms are allowed to work freely between the two support wheels loading and unloading packages to and from the conveyor arrangement.

The arm suspension frame may comprise at least two support arms configured to be moved into contact with a respective side of the transport or transport container.

The at least two support arms may provide further stability to the arm suspension frame by locking towards the side walls of the transport or transport container and thereby keeping the arm suspension frame in a rigid position while operating the robot arms. The support arms may be extended out towards the side walls when the arm suspension frame and the robot arms are in the correct position, and when moving the arm suspension frame the support arms may be retracted to allow a smooth movement along the transport or transport container.

The arm suspension frame may comprise guide wheels that contacts the side walls of the transport or transport container when moving the arm suspension frame in and out from the transport or transport container, thereby guiding and supporting the movement of the arm suspension frame.

The conveyor arrangement may be telescopically extendable. As discussed above, telescopic mechanisms are a space efficient way of storing the conveyor arrangement when not in use. The conveyer arrangement may convey packages through belts, chains, rollers, or other conveying means.

The conveyor arrangement may be connected to the supporting system. By connecting the conveyor arrangement to the supporting system, the conveyor arrangement and the arm suspension frame may be moved in and out of the transport or transport container as one common unit by the supporting system. Thereby, the conveyor arrangement and the arm suspension frame may have one common drive system which may provide a more efficient arrangement.

The conveyor arrangement may be connected to the support wheels of the supporting system. The conveyor arrangement may be connected to the support wheels such that the support wheels help with suspending the conveyor arrangement. This may provide an improved stability to the conveyor arrangement.

The conveyor arrangement may be an automated mobile platform. The conveyor arrangement may be moved in and out of the transport or transport container by being an automated mobile platform. The automated mobile platform may be any self-moving vehicle, such as an automatic guide vehicle, AGV, or an automated movable robot, AMR. The automated mobile platform may reduce the need of personnel and also improve the efficiency of the arrangement.

Each robot arm may comprise a gripper comprising at least one vacuum gripper, or mechanical gripper for gripping the packages. Different tools for gripping the packages may be used. The decision between a vacuum gripper and a mechanical gripper may depend on the specific requirements of the application. The vacuum gripper may be more suitable for lightweight packages, or packages with flat surfaces. The mechanical gripper may be more suitable for packages with irregular shapes, or heavier packages.

In some arrangement, one robot arm may have mechanical gripper and another robot arm may have a vacuum gripper. This may allow the arrangement to use the robot arm with the most suitable gripper for each package.

The control unit may be configured to individually control each robot arm such that a gripper of a first of the at least two robot arms grips a first package and a gripper of a second of the at least two robot arms supports a second package adjacent the first package when the first robot arm lifts, pushes, or pulls the first package, thereby collaborating when moving one package.

It may be challenging to remove a first package from a pile of stacked packages, due to the packages being tightly stacked. In such example, the master robot arm may grab a first package in the stack of packages, while the slave robot arm supports the removal of the first package by supporting a second package adjacent to the first package. Supporting the second package should be understood as holding or keeping the second package in its position while removing the first package, to avoid that the stack of packages falls over. When the control unit controls the robot arms to collaborate in the described way, it allows the arrangement to deal with differently sized or shaped packages that may be challenging for a single robot arm to handle. Further, the collaboration enables the arrangement to break stacks of packages with less risk of damaging the packages.

The control unit may be configured to individually control each robot arm such that grippers of the at least two robot arms together grip one common package and together move the common package, thereby collaborating when moving one package.

The robot arms may be controlled to lift different parts of the package if the package have for example a challenging shape, to thereby collaborate when moving one package. This operation may be performed when a package is too long or heavy to be easily lifted by one robot arm. As an example, a master robot arm may grab the package in a first end and start moving it out from the pile of packages and then, a slave robot arm grabs the package at a second end, freed from the surrounding packages through the movement of the master robot arm, thereby assisting the master robot arm with the movement of the package.

The arrangement may further comprise a vision system providing information to the control unit. The control of the at least two robot arms may be based on information from the vision system.

With the vision system, the control unit may plan and move the robot arms based on live information from the vision system. Thereby, the control system may detect deviations among the stored packages and adapt the movement based on this information. The vision system may provide the control unit with information about how the packages are stacked, the shape of the package. The control unit may further comprise a motion planning system which assists the control unit in deciding the most efficient motions of the robot arms.

The arrangement may further comprise a radar system for detecting how far into the transport or transport container the arm suspension frame should be moved. The radar system may be used to provide information how far from the packages the arm suspension frame is and based on that information, the control unit may operate the supporting system to move the arm suspension frame in and out from the transport or transport container.

The vision system may comprise one or more cameras mounted on the arm suspension frame and/or on the at least two robot arms. The vision system may, for example, use two cameras to gather information for the control unit.

According to a second aspect of the present disclosure a method for operating an arrangement according the first aspect to unload and/or load packages from/to a transport or transport container is provided. The method comprises gripping a first package with a gripper of a first robot arm, moving the first package with the first robot arm, and supporting the movement of the first package by using a gripper of a second robot arm, thereby providing a collaboration between the first and second robot arms; during which collaboration: the movement of the first package is supported by the gripper of the second robot arm holding a second package adjacent the first package when the first robot arm lifts, pushes, or pulls the first package; or the gripper of the second robot arm grips the first package together with the gripper of the first robot arm, whereby the two robot arms together grip and move one common package.

The method may further comprise scanning package information with the vision system, determining a package to grip and how the robot arms should collaborate when gripping the package according to the package information, and when moving the package to/from the transport or transport container.

The method may further comprise moving the arm suspension frame into or out from the transport or transport container with a telescopic arm of the supporting system to a desired position.

The method may further comprise scanning a desired position for a stack of packages and moving the package from the conveyor arrangement to the desired position, or scanning a position of a stack of packages and moving the package from the stack to the conveyor arrangement.

The method may further comprises adjusting the position of the arm suspension frame.

According to a third aspect of the present disclosure the use of an arrangement according to the first aspect for unloading and/or loading a transport or transport container where the transport or transport container is a truck trailer, a train carriage, an airplane, or a container.

The advantages of the various features have been discussed above with reference to the blank according to the first aspect and those advantages are equally applicable with reference to the above method according to the second aspect and to the use of the arrangement according to the third aspect. Also, the various variants and preferred embodiments discussed with reference to the arrangement are equally applicable to the above method according to the second aspect and to the use of the arrangement according to the third aspect.

Further scope of applicability of the present disclosure will become apparent from the detailed description given below. However, it should be understood that the detailed description and specific examples, while indicating preferred embodiments of the disclosure, are given by way of illustration and that various changes and modifications within the scope of the disclosure will become apparent to those skilled in the art from this detailed description.

Hence, it is to be understood that the present disclosure is not limited only to the particular parts of the arrangement, or the steps of the methods described, since the actual implementation of such arrangement and method may vary, and further parts or steps may be provided.

### Brief description of the drawings

The present disclosure will by way of example be described in more detail with reference to the appended schematic drawings, which show a presently preferred embodiment of the present disclosure.
- Fig. 1: illustrates an arrangement with two robot arms unloading a transport container.
- Fig. 2A: illustrates an arrangement with a supporting system in the extended position
- Fig. 2B: illustrates an arrangement with a supporting system in the extracted position.
- Fig. 3A: illustrates a first type of collaboration between two robot arms.
- Fig. 3B: illustrates a second type of collaboration between two robot arms.
- Fig. 4: illustrates an arrangement that is moved by an automated guided vehicle.
- Fig. 5: illustrates, highly schematically, a method for operating an arrangement.

### Detailed description of the drawings

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

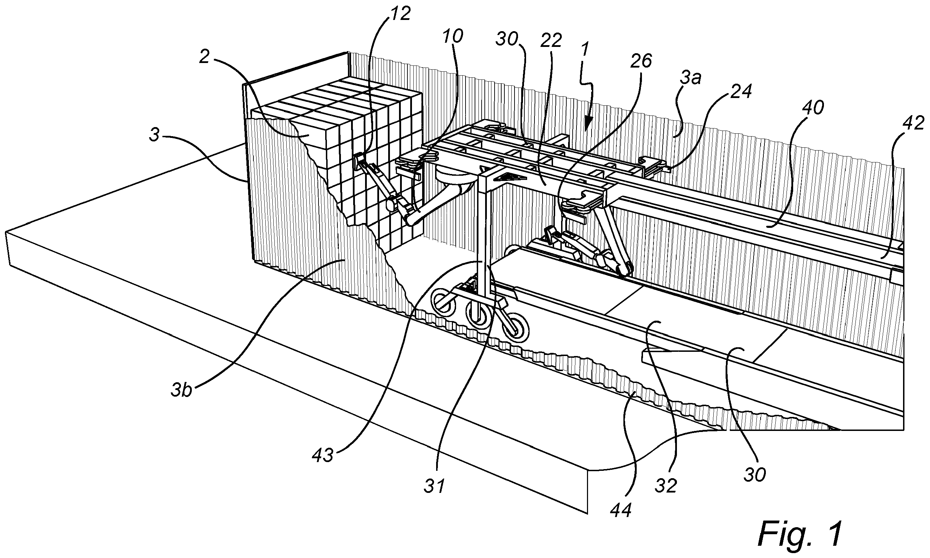

Fig. 1 illustrates an arrangement 1 for unloading and/or loading packages 2 from/to a transport or transport container 3. In the context of the invention, the term transport or transport container includes different types of ordinary containers used for shipping, but it may also be other volumes reassembling such closed volume, such as a truck trailer, a train carriage, or an airplane. Fig. 1 focus on the portion of the arrangement 1 that operates when moving packages 2. The arrangement 1 comprises an arm suspension frame 20 which suspends two robot arms 10. The skilled person realizes that more than two robot arms may be provided.

The arrangement 1 further comprises a conveyor arrangement 30 configured to move the packages 2 into the transport or transport container 3 or out from the transport or transport container 3. The conveyer arrangement 30 is telescopically extendable allowing the conveyor arrangement 30 to be extended and retracted. The conveyor arrangement 30 comprises at least one conveyor belt 32 for transporting the packages 2. In the context of the invention, the term "conveyor belt" includes different types of conveyors, such as belts and chains, or combinations thereof. When unloading the packages 2 from the transport or transport container 3, the robot arms 10 are lifting packages 2 from the transport or transport container 3 and up on the conveyor belt 32 which moves the packages 2 out from the transport or transport container 3. When loading packages 2, the conveyer belt 32 moves the package 2 into the transport or transport container 3 and the robot arms 10 lift and stack the packages 2 in the transport or transport container 3.

The arrangement 1 further comprises a supporting system 40 that is connected to the arm suspension frame 20. The supporting system 40 comprises a telescopic arm 42 connected to the arm suspension frame 20. The arm suspension frame 20 is movable in and out of the transport or transport container 3 by the telescopic arm 42. By extracting the telescopic arm 42, the arm suspension frame 20 is moved into the transport or transport container 3, and by retracting the telescopic arm 42, the arm suspension frame 20 is moved out from the transport or transport container 3. By moving the arm suspension frame 20 in and out of the transport or transport container 3, the robot arms 10 will, consequently, also be moved along. The arm suspension frame 20 is moved substantially linearly in and out of the transport or transport container 3. The supporting system 40 further comprises support wheels 44. The support wheels 44 assist the supporting system 40 in moving and holding the arm suspension frame 20 by providing stability to the supporting system 40 and thereby to the arm suspension frame 20. There are two sets of support wheels 44. The skilled person realizes that one or more sets of support wheels 44 may be arranged. A frame 43 of the support wheels extends from the supporting system 40 and the arm suspension frame 20 towards the ground which the support wheels 44 contacts. The frames 43 extends towards ground on a respective side of the conveyor arrangement 30 such that the conveyor arrangement 30 is located between the sets of support wheels 44. The arm suspension frame 20 will thereby be located directly above the outer end 31 of the conveyor arrangement 30. Thereby, the robot arms 10 are allowed to work freely in the space between the arm suspension frame 20 and the conveyor arrangement 30, when loading and unloading packages to and from the conveyor arrangement 30.

The conveyor arrangement 30 is connected to the frame 43 of the supporting system 40. By connecting the conveyor arrangement 30 to the supporting system 40, the conveyor arrangement 30 and the arm suspension frame 20 may be moved in and out of the transport or transport container 3 as one common unit by the telescopic arm 42 of the supporting system 40. Further, by connecting the conveyor arrangement 30 to the frame 43, the support wheels 44 may assist with holding up the outer end 31 of the conveyor arrangement 30.

The robot arms 10 are disclosed as being suspended in the arm suspension frame 20 such that robot arms 10 are hanging from the arm suspension frame 20. The robot arms 10 may be described as roof-mounted robot arms 10. The skilled person realizes that other suspension directions may be used. The suspended robot arms 10 provide better access for the robot arms 10 when operating inside a closed volume, compared from a robot arm which is mounted at ground level. When the robot arms 10 are suspended, the robot arms 10 are allowed to lift packages from the conveyor arrangement 30 and to the transport or transport container 3 without needing to rotate. The arm suspensions frame 20 comprises two tracks 22, one for each robot arm 10. The tracks 22 are linear and allow each robot arm 10 to move along its respective track 22. The tracks 22 are provided along the arm suspension frame 20, in the same direction as the arm suspension frame 20 is moved in and out from the transport or transport container 3 by the telescopic arm 42. Thereby, the robot arms 10 are allowed to move along the arm suspension frame 20. The relative movement between the robot arm 10 and the arm suspension frame 20 may, for example, be achieved by implementing tracks, rails, or grooves on the arm suspension frame 20 and having slider or linear bearings on the robot arm 10. However, as is known by the skilled person there are many mechanisms that may contribute to such relative movement.

The arm suspension frame 20 comprises four support arms 24 configured to be moved into contact with a respective side 3a, 3b of the transport or transport container 3 when the robot arms 10 are operating. The arm suspension frame 20 further comprises guide wheels 26 that are used for guiding the arm suspension frame 20 into or out from the transport or transport container 3 when the supporting system 40 is moving the arm suspension frame 20. The guide wheels 26 are in contact with sides 3a, 3b of the transport or transport container 3. As an example, when the arm suspension frame 20 is moved into a transport container 3, the guide wheels 26 will assist with guiding the arm suspension frame 20. When the arm suspension frame 20 has reached the desired position, the supporting system 40 will stop and the support arms 24 pushes out towards the sides 3a, 3b of the transport container 3 and locks the arm suspension frame 20 in that position. This keeps the arm suspension frame 20 in a rigid position while the robot arms 10 are operating. When, for example, the first rows of packages have been moved and the robot arms 10 are not able to reach the next row of packages, the support arms 24 releases from the locked rigid position and allow the arm suspension frame 20 to be moved further into the transport or transport container 3. When the new position is reached, the support arms 24 are again extended out to the sides 3a, 3b of the transport or transport container 3, locking the arm suspension frame 20 in the rigid position. This process is repeated during the loading or unloading of the transport or transport container 3.

Each robot arm 10 comprises a gripper 12 to be used for gripping the packages. The gripper 12 may by way of example comprise a vacuum gripper. It should be noted that mechanical grippers may be used as well. Grippers of different types are well known in the art and are not further discussed.

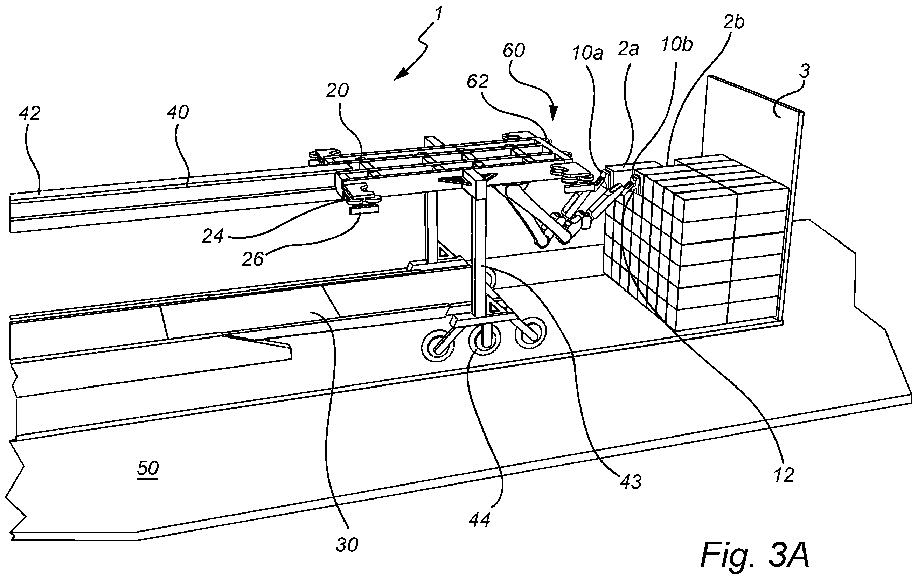

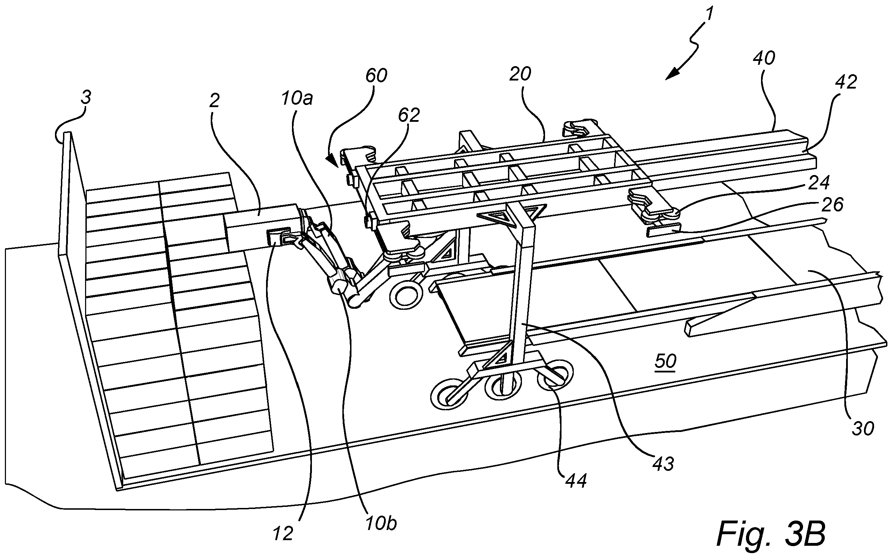

The arrangement 1 further comprises a control unit 50 configured to individually control the movement of each robot arm 10 such that the two robot arms 10 move individual packages 2, or such that the two robot arms 10 collaborate when moving one package 2. The control unit 50 may shift between a first mode allowing a collaboration between the robot arms 10 when lifting a common package 2 and a second mode allowing packages 2 to be individually moved by each robot arm during the loading or unloading process. Different collaborations between the robot arms 10 will be described in connection to Fig. 3A and 3B.

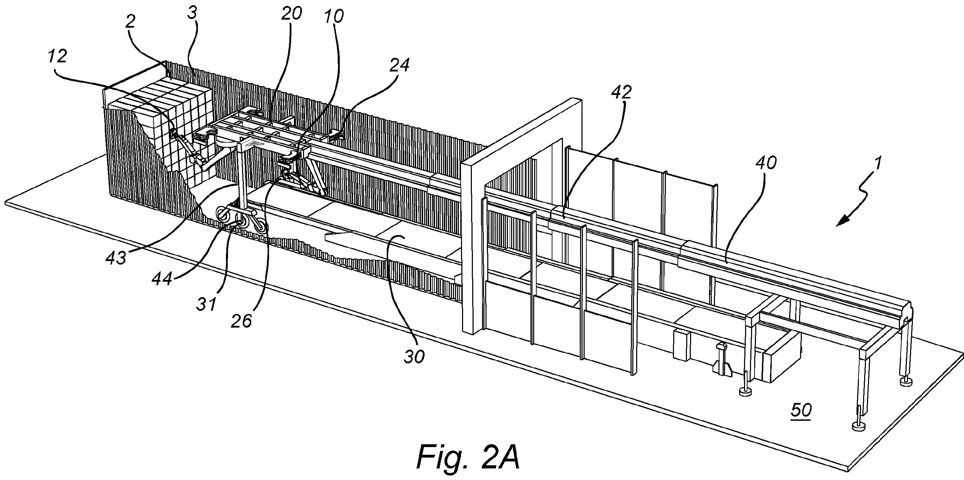

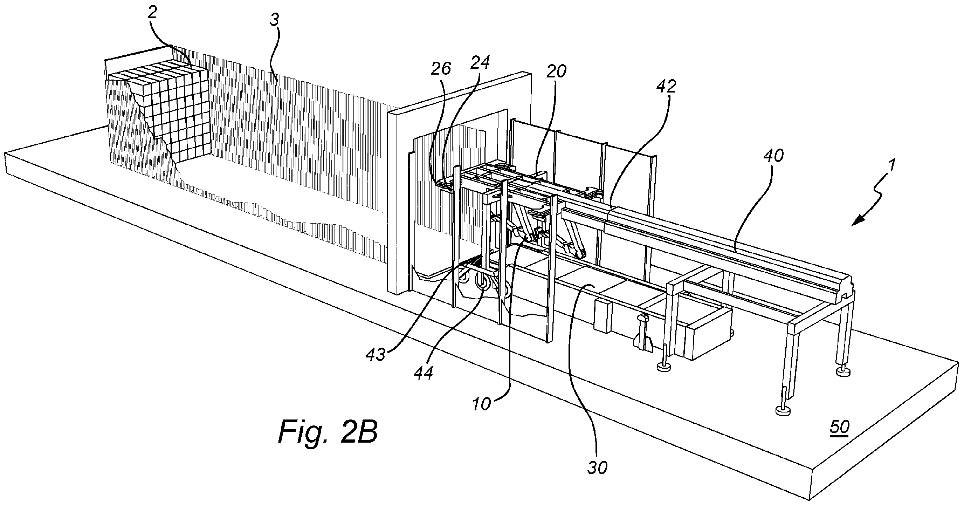

Turning to Fig. 2A and 2B, the arrangement 1 is illustrated in the extracted position and the retracted position. In Fig. 2A the telescopic arm 42 is extended and the arm suspension frame 20 is positioned inside the transport or transport container 3. In Fig. 2B the telescopic arm 42 is retracted and the arm suspension frame 20 is positioned outside of the transport or transport container 3. As can be seen in Fig. 2B, both the telescopic arm 42 and the conveyor arrangement 30 are telescopically moveable allowing extension and retraction. Thereby, the arm suspension frame 20 can be moved in and out from the transport or transport container 3. The telescopic arm 42 allows the arm suspension frame 20 to be moved until the robot arms 10 can reach the first row of packages 2. When the robot arms 10 are not able to reach any more packages 2, the telescopic arm 42 can move the arm suspension frame 20 further into the transport or transport container 3.

Turning to Figs. 3A and 3B, different collaborations between the robot arms 10 are illustrated. The arrangement 1 is similar to the arrangement 1 described in Fig. 1-2B, comprising the robot arms 10, the arm suspension frame 20, the conveyor arrangement 30, the supporting system 40 and the control unit 50. Fig. 3A and 3B provides different view of for example the frame 43 and the support wheels 44, as well as the support arms 24 and the guide wheels 26. However, the function and implementation of these feature are the same as in Fig. 1-2B.

The arrangement 1 is provided with a vision system 60. The vision system 60 gathers information about the packages 2 and the stacks of packages 2 and provide this information to the control unit 50 of the arrangement 1. The information may relate to how the packages 2 are stacked and how the packages 2 are oriented in the stack. The information may further relate to individual package characteristics such as size and shape. The information can also relate to how packages 2 to be stacked are oriented on the conveyor belt.

The control unit 50 thereafter controls the robot arms 10 based on the information. Further, the vision system 60 provides the control unit 50 with live information about the packages 2. In an occasion where one package is dropped or one staple in the stack should fall over, the vision system 60 may locate these packages and provide the location to the control unit 50. The control unit 50 is provided with an internal motion planning system which assists the control unit 50 in deciding the most efficient motions of the robot arms 10.

The vision system 60 is exemplified as comprising two cameras 62 mounted on the arm suspension frame 20. The two cameras 62 are one way of providing information for the vision system 60. The two cameras 62 are located at the front of the arm suspension frame 20, facing the packages 2. The cameras 62 are tiltable towards the packages 2 such that the cameras 62 may tilt between different positions to scan a larger area. The skilled person realizes that the vision system 60 may be configured in a number of ways with remained functionality. By way of example, one camera only or more than two cameras may be used.

The arrangement 1 further comprises a radar system 80 for detecting how far into the transport or transport container 3 the arm suspension frame 20 should be moved. The radar system 80 may be used to provide information how far from the packages 2 the arm suspension frame 20 is and based on that information, the control unit 50 may operate the supporting system 40 to move the arm suspension frame 20 in and out from the transport or transport container 3. The radar system 80 may for example be implemented through different types of sensors.

The collaboration of the robot arms 10 will be described in the terms of a master robot arm 10a and a slave robot arm 10b. The master robot arm 10a is main responsible for lifting the package 2 and the slave robot arm 10b supports the master robot arm 10a during the lift. However, it should be noted that which robot arm 10 that is the master robot arm 10a may switch between each package 2, depending on which of the robot arms 10 that are most suitable to perform the lift.

In Fig. 3A a first example of collaboration is provided. The control unit 50 is configured to individually control each robot arm 10 such that the gripper 12 of the master robot arm 10a grips a first package 2a and the gripper 12 of the slave robot arm 10b supports a second package 2b adjacent the first package 2a when the master robot arm 10a lifts, pushes, or pulls the first package 2a. Thereby the two robot arms 10 are collaborating when moving one package 2. When breaking a stack of packages, it may be challenging to remove the first package 2a without the other packages 2 falling over. By providing support, i.e., holding an adjacent package in position, with the slave robot arm 10b, the stack may be broken without risking, that, other packages fall over. In these occasions, the vision system 60 will provide information to the control unit 50 on which package 2 to start with and how the slave robot arm 10b should operate.

In Fig. 3B a second example of how the master robot arm 10a and the slave robot arm 10b may collaborate is illustrated. The control unit 50 is configured to individually control each robot arm 10a, 10b such that grippers 12 of the two robot arms 10a, 10b together grip one common package 2 and together move the common package 2, thereby collaborating when moving one package 2. The vision system 60 may provide information that, for example, the upcoming package 2 is a long package that requires collaboration from the two robot arms 10a, 10b. The master robot arm 10a may grab the package 2 in a first end thereof and start moving it out from the stack of packages and then, the slave robot arm 10b grabs the package at a second end thereof, freed from the surrounding packages through the movement of the package by the master robot arm 10a, thereby assisting the master robot arm 10a with the movement of the package 2.

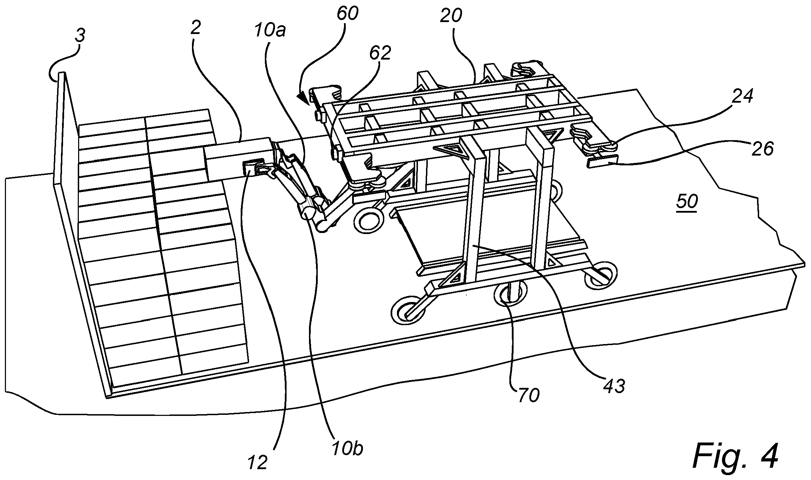

Turning to Fig. 4 an arrangement 1 is provided where the supporting system 40 and the conveyor arrangement 30 are an automated guide vehicle, AGV 70. Instead of using a telescopic arm for moving the arm suspension frame 20 in and out from the transport or transport container 3, the AGV 70 may be used instead. The conveyor arrangement 30 may use the AGV 70 to move in and out from the transport or transport container 3. There may also be separate AGVs for moving the arm suspension frame 20 and the conveyor arrangement 30.

The AGV 70 may be any type of automated mobile platform. It may for example also be an automated moveable robot, AMR.

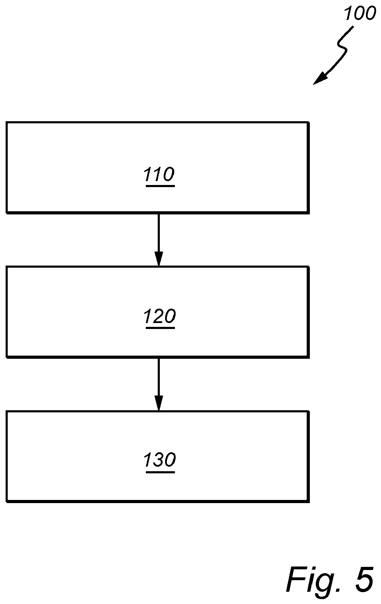

Turning to Fig. 5 a method 100 for operating the arrangement 1 according to Fig. 1-4 to unload and/or load packages from/to a transport or transport container is provided. The method comprises gripping 110 the first package 2a with the gripper of a first robot arm 10a and moving 120 the first package 2a with the first robot arm 10a.

The method further comprises supporting 130 the movement of the first package 2a by using the gripper 12 of a second robot arm 10b thereby providing a collaboration between the first 10a and second 10b robot arms; during which collaboration: the movement of the first package 2a is supported by the gripper 12 of the second robot arm 10b holding a second package 2b adjacent the first package 2a when the first robot arm 10a lifts, pushes, or pulls the first package 2a; or the gripper 12 of the second robot arm 10b grips the first package 2a together with the gripper 12 of the first robot arm 10a, whereby the two robot arms 10a, 10b together grip and move one common package 2a.

The method 100 may further comprise scanning package information with the vision system 60, determining a package 2 to grip and how the robot arms 10a, 10b should collaborate.

The method 100 may further comprise gripping the package 2 according to the package information, and moving the package 2 to/from the transport or transport container 3.

The method 100 may further comprise moving the arm suspension frame 20 in or out from the transport or transport container 3 with the telescopic arm 42 of the supporting system 40 to a desired position.

The method 100 may further comprise scanning a desired position for a stack of packages and moving the package 2 from the conveyor arrangement 30 to the desired position, or scanning a position of a stack of packages and moving the package 2 from the stack to the conveyor arrangement 30.

The method 100 may further comprises adjusting the position of the arm suspension frame 20 on a regular basis as the stack of packages either grows or becomes smaller.

In other words, as an example relating to unloading the transport container 3, the arrangement 1 is provided with the transport container 3. When the transport container 3 is positioned and ready to be unloaded, the supporting system 40 moves the arm suspension frame 20 and the conveyor arrangement 30 into the transport container 3. When the visions system 60 detects the first row of packages, the supporting system 40 stops and the support arms 24of the arm suspension frame 20 locks the arm suspensions frame 20 in a rigid position by extending the support arms 26 into contact with the sides 3a, 3b of the transport container 3. This allows the robot arms 10 to start unloading packages 2 with the help of the vision system 60 and the control unit 50. The control unit 50 decides which order the packages 2 should be unloaded and detects if any packages need a collaboration between the two robot arms 10. If collaboration is needed the two robot arms 10 is individually controlled to collaborate by the control unit 50 as described in connection to Fig. 3A and 3B. However, if no collaboration is required, the robot arms 10 will individually move packages one and one without collaboration between each other. When the robot arms 10 cannot reach any more packages, the supporting system 40 moves the arm suspension frame 20 further into the transport container 3, and the arrangement 1 may keep unloading the transport container 3. When all packages have been unloaded from the transport container 3, the arrangement 1 may either start to fill the transport container 3 up with new packages, or withdraw from the transport container 3 with help of the supporting system 40. The difference is that the robot arms 10, based on information from the vision system 60 picks packages from the conveyor belt and stack them in the transport container 3.

The present disclosure further relates to the use of an arrangement 1 as described above.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An arrangement (1) for unloading and/or loading packages (2) from/to a transport or transport container (3), the arrangement (1) comprising:
at least two robot arms (10);
an arm suspension frame (20) configured to support the at least two robot arms;
a conveyor arrangement (30); and
a supporting system (40) connected to the arm suspension frame, wherein the supporting system is configured to allow the arm suspension frame to be moved in to and out of the transport or transport container,
wherein the at least two robot arms are configured to move packages between the transport or transport container and the conveyor arrangement, and
wherein the arrangement further comprises a control unit (50) configured to selectively individually control the movement of each robot arm such that said at least two robot arms move individual packages, or to individually control the movement of each robot arm such that said at least two robot arms collaborate when moving one package.

2. The arrangement according to claim 1, wherein the arm suspension frame comprises a track (22) for each robot arm, and wherein each robot arm is configured to be individually moveable along the track along at least a first part of the arm suspension frame.

3. The arrangement according to claim 1 or 2, wherein the supporting system comprises a telescopic arm (42) connected to the arm suspension frame, wherein the arm suspension frame is movable in and out of the transport or transport container by the telescopic arm.

4. The arrangement according to any one of the preceding claims, wherein the supporting system comprises support wheels (44).

5. The arrangement according to any one of the preceding claims, wherein the arm suspension frame comprises at least two support arms (24) configured to be moved into contact with a respective side (3a, 3b) of the transport or transport container.

6. The arrangement according to any one of the preceding claims, wherein the conveyor arrangement is telescopically extendable.

7. The arrangement according to any one of the preceding claims, wherein the conveyor arrangement is connected to the supporting system.

8. The arrangement according to any one of claims 1 to 6, wherein the conveyor arrangement is an automated mobile platform.

9. The arrangement according to any one of the preceding claims, wherein each robot arm comprises a gripper (12) comprising at least one vacuum gripper, or mechanical gripper for gripping the packages.

10. The arrangement according to any one of the preceding claims, wherein the control unit is configured to individually control each robot arm such that a gripper of a first (10a) of the at least two robot arms grips a first package and a gripper of a second (10b) of the at least two robot arms supports a second package adjacent the first package when the first robot arm lifts, pushes or pulls the first package, thereby collaborating when moving one package.

11. The arrangement according to any one of the preceding claims, wherein the control unit is configured to individually control each robot arm such that grippers of the at least two robot arms together grip one common package and together move the common package, thereby collaborating when moving one package.

12. The arrangement according to any one of the preceding claims, further comprising a vision system (60) providing information to the control unit,
wherein the control of the at least two robot arms is based on information from the vision system.

13. The arrangement according to claim 12, wherein the vision system comprises one or more cameras (62) mounted on the arm suspension frame and/or on the at least two robot arms.

14. A method (100) for operating an arrangement (1) according to any of claims 1 to 13 to unload and/or load packages from/to a transport or transport container, the method comprising:
gripping (110) a first package with a gripper of a first robot arm,
moving (120) the first package with the first robot arm, and
supporting (130) the movement of the first package by using a gripper of a second robot arm, thereby providing a collaboration between the first and second robot arms; during which collaboration:
the movement of the first package is supported by the gripper of the second robot arm holding a second package adjacent the first package when the first robot arm lifts, pushes, or pulls the first package; or
the gripper of the second robot arm grips the first package together with the gripper of the first robot arm, whereby the two robot arms together grip and move one common package.

15. The method according to claim 14 wherein the arrangement comprises a vision system, the method further comprising:
scanning (140) package information with the vision system,
determining (150) a package to grip and how the robot arms should colla borate,
gripping (160) the package according to the package information, and
moving (170) the package to/from the transport or transport container.

16. Use of an arrangement according to any one of claims 1 to 13 for unloading and/or loading a transport or transport container where the transport or transport container is a truck trailer, a train carriage, an airplane, or a container.
